# FASCICULE DE BREVET EUROPEEN

(11) **EP 2 263 910 B1**
(45) Date de publication et mention de la délivrance du brevet: **01.02.2012**
(21) Numéro de dépôt: 10165450.7
(22) Date de dépôt: 09.06.2010
(51) Int. Cl.: B60N 2/28

(54) **Siège auto pour enfant, destiné à équiper un siège de véhicule**
Autokindersitz zum Ausstatten eines Fahrzeugsitzes
Car seat for a child, intended for being installed on a seat of a vehicle

(30) Priorité: 12.06.2009 FR 0953944; 27.10.2009 FR 0957547
(43) Date de publication de la demande: 22.12.2010
(73) Titulaire: Dorel France SA, 49309 Cholet Cedex (FR)
(72) Inventeur: Biaud, Richard, 49340 TREMENTINES (FR); Renaudin, François, 49300 CHOLET (FR)
(74) Mandataire: Bioret, Ludovic

(56) Documents cités:
- EP-A1- 1 145 899
- DE-A1- 3 506 122
- DE-A1- 4 140 620
- FR-A1- 2 436 609
- FR-A1- 2 742 110
- FR-A2- 2 342 083
- FR-A3- 2 745 535
- US-A1- 2007 001 495
- US-A1- 2008 012 401

## Description

### 1. Domaine de l'invention

Le domaine de l'invention est celui de la puériculture. Plus précisément, l'invention concerne les sièges auto pour enfant qui sont destinés à être installés sur les sièges passagers des véhicules. Elle concerne en particulier la solidarisation de ces sièges auto pour enfant aux véhicules, notamment automobiles.

### 2. Solutions de l'art antérieur

Pour la solidarisation des sièges auto au véhicule, est apparu depuis quelques années un nouveau type de sièges auto pour enfant répondant à la norme dite « Isofix » (marque déposée). Ces sièges auto pour enfant comportent un système d'ancrage comprenant des pinces de fixation, en général au nombre de deux, qui viennent se solidariser sur des points d'ancrage prévus dans le véhicule, et généralement accessibles entre le dossier et l'assise du siège de ce véhicule. Un indicateur permet de vérifier que les pinces de fixation sont correctement solidarisées sur les points d'ancrage du véhicule. Les risques de mauvaise fixation de ces pinces au véhicule sont ainsi réduits.

La réglementation indique qu'un troisième élément doit être prévu sur la structure du siège ou de l'embase, pour éviter que le siège auto ne bascule en cas d'accident, de choc ou de freinage brusque. Ce troisième élément est généralement assuré soit par une jambe de force soutenant la structure en prenant appui sur le sol du véhicule soit par une sangle anti-basculement, encore appelée sangle de « top tether », solidarisant une partie supérieure de la structure du siège à un élément d'accrochage du véhicule prévu à cet effet.

Lorsqu'une sangle anti-basculement est prévue, celle-ci doit présenter une longueur minimale de 2 m, fixée par la réglementation, pour permettre une solidarisation dans tout type de véhicule.

Pour être efficace et jouer son rôle de retenue de la structure du siège en cas d'accident, la sangle anti-basculement doit être tendue. C'est pourquoi il est prévu qu'elle soit associée à un indicateur de tension ou non jeu.

Un siège auto de ce type est décrit dans le document de brevet US 2008/0012401. Il prévoit une fixation de la sangle anti-basculement en deux points du dossier du siège auto.

Dans le cas de sièges auto pouvant présenter un mouvement de rotation et/ou d'inclinaison, la sangle anti-basculement, qui doit rester tendue en fonctionnement, est souvent solidarisée à une partie supérieure d'une extension verticale de l'embase.

Cependant, certains sièges auto présentent une embase sans extension verticale, notamment pour des raisons de compacité. Dans ce dernier cas, la sangle anti-basculement peut être fixée au dossier du siège auto. Elle doit alors présenter une longueur suffisante pour permettre le mouvement du siège en rotation et/ou en inclinaison (un enrouleur pouvant, par exemple, être prévu).

La demande de brevet EP 1 145 899, par exemple, décrit ce type de siège, comprenant une sangle anti-basculement fixée en deux points du dossier du siège auto rotatif relativement à une embase.

Une sangle anti-basculement de ce type peut entraîner de nombreux cas de mauvais usages. En particulier, la sangle peut glisser ou rester coincée (donc détendue) lors du retour du siège en position de voyage et/ou en position droite, conduisant à une fausse bonne tension de la sangle. Un siège auto pour enfant correspondant au préambule de la première revendication indépendante, ainsi qu'un dispositif anti-basculement correspondant au préambule de la seconde revendication indépendante, est connu du document DE 41 40 620 A1.

### 3. Objectifs de l'invention

L'invention a notamment pour objectif de pallier tout ou partie de ces inconvénients de l'art antérieur.

Plus précisément, l'invention a pour objectif de fournir un siège auto sécurisé, plus performant sur le plan dynamique.

Un autre objectif de l'invention est de fournir un siège auto plus compact et plus léger par rapport à l'art antérieur.

Un autre objectif de l'invention est de réduire le volume de matière nécessaire pour le siège auto de manière à réduire les coûts de fabrication de celui-ci et à respecter l'environnement.

Un autre objectif, encore, est de fournir un siège auto permettant d'éviter les cas de mauvais usages décrits précédemment.

### 4. Exposé de l'invention

Tout ou partie de ces objectifs, ainsi que d'autres qui apparaîtront par la suite, sont atteints à l'aide d'un siège auto pour enfant, destiné à équiper un siège de véhicule, comportant. Les carastéristiques techniques de la revendication 1, selon un premier aspect de l'invention.

Grâce à l'invention, la tension des moyens anti-basculement est assurée au moins en partie par le premier brin lorsque celui-ci est fixé au véhicule et par le deuxième brin lorsque celui-ci est fixé à l'embase.

Le troisième brin, fixé à la structure du siège auto peut présenter par exemple une longueur et/ou une extensibilité variable et suffisante, de manière à permettre un mouvement en rotation et/ou en inclinaison de la structure par rapport à l'embase.

Grâce à cet aspect de l'invention, la tension des moyens anti-basculement est assurée, indépendamment de la position que peut éventuellement occuper la structure du siège auto relativement à l'embase, position inclinée ou droite, position d'installation ou de voyage, dos ou face à la route.

Le siège auto peut comporter une embase ne comprenant pas d'extension verticale s'étendant sur sensiblement toute la hauteur de la structure du siège auto. Grâce à cet aspect, le siège de l'invention est plus performant sur le plan dynamique. En effet, le fait de ne pas avoir d'embase qui remonte derrière l'assise pour retenir l'assise lors d'un accident peut permettre de reculer la place prévue pour la tête de l'enfant et par conséquent de limiter l'avancement de la tête lors de l'accident.

Les trois brins de sangle peuvent être réalisés dans un même matériau, par exemple un tissé. En variante, les trois brins peuvent être réalisés dans des matériaux différents, par exemple pour deux d'entre eux.

Selon un premier mode de réalisation, deux desdits brins peuvent correspondre aux deux extrémités d'une même sangle, le dernier brin, par exemple le deuxième brin, pouvant être fixé de manière permanente à ladite sangle. Dans ce cas, le dernier brin peut être cousu, soudé et/ou collé à ladite sangle, cette liste n'étant pas limitative.

Selon un deuxième mode de réalisation, l'un des brins, notamment le deuxième brin, peut être fixé de manière amovible à au moins un des deux autres brins, notamment par clippage, par l'intermédiaire d'une pince ou d'un crochet, par exemple.

La structure peut être mobile en rotation relativement à l'embase.

La structure peut, en variante ou additionnellement, être mobile en translation relativement à l'embase, de manière à pouvoir faire coulisser la structure relativement à l'embase pour incliner le siège auto.

Le deuxième brin peut être fixé à l'embase dans une région centrale de celle-ci, par exemple de manière à permettre une certaine symétrie de la fixation. De même, le troisième brin peut être fixé dans une région centrale de la structure. Le troisième brin peut être fixé dans une partie supérieure du dossier de la structure.

Le siège auto peut comporter un dispositif enrouleur destiné à recevoir au moins une portion du troisième brin sous forme enroulée. Le dispositif enrouleur peut être par exemple intégré dans la structure, par exemple dans une région centrale de la structure. Le dispositif enrouleur peut être fixé dans un logement situé dans une partie supérieure et/ou dans une région centrale du dossier.

Le premier brin peut se prolonger, après un point de fixation au véhicule, par une portion de sangle de réglage. Lorsque le deuxième brin est fixé de manière amovible aux deux autres brins, cette portion de sangle de réglage peut être supprimée, le réglage de la longueur des brins, notamment des premier et troisième brins, pouvant se faire avant de fixer le deuxième brin aux deux autres brins, notamment lorsque le siège auto comporte un dispositif enrouleur.

Le dossier peut présenter une ouverture transversale s'étendant sur une grande portion de la largeur du dossier et au travers de laquelle circule le troisième brin. Cette ouverture transversale de grande largeur peut être utile notamment lorsque la structure est mobile en rotation relativement à l'embase. En effet, dans ce cas et jusqu'à un certain point déterminé par la largeur de cette ouverture transversale, la variation de la tension des moyens anti-basculement, notamment du troisième brin, peut être limitée lors de la rotation de la structure. La largeur de l'ouverture peut par exemple être déterminée de manière à ce que la structure puisse être tournée d'un angle d'au moins environ 90° avec une limitation de la variation de la tension des moyens anti-basculement. Une telle rotation de 90° de la structure peut par exemple correspondre à la rotation nécessaire pour passer d'une position de voyage où le siège auto est face à la route à une position d'installation de l'enfant dans le siège auto.

Le siège auto peut par exemple présenter la possibilité d'être monté au moins face à la route ou dos à la route.

La structure du siège auto peut comporter au moins un guide-sangle disposé sur le dossier de manière à guider le troisième brin. Ce guide-sangle peut par exemple être placé en haut du dossier sur au moins un côté voire sur les deux côtés du dossier. Il peut consister par exemple en un élément fixé ou formé d'un seul tenant avec la structure, par exemple par moulage de matière, en forme d'agrafe. Le guide-sangle peut consister en une forme du dossier permettant un guidage naturel. Le guide-sangle peut présenter une couleur différente du dossier pour être immédiatement et facilement identifié par l'utilisateur.

L'embase peut comprendre un système d'ancrage au véhicule comportant deux pinces agencées pour être solidarisées à des points d'ancrage correspondants du véhicule, par exemple du type Isofix mentionné plus haut.

Le siège auto peut comporter au moins un détecteur et/ou un indicateur de tension ou indicateur de non jeu d'au moins l'un des brins, notamment de l'ensemble des brins formant les moyens anti-basculement. Cela permet à l'utilisateur d'avoir une information sur la tension des moyens anti-basculement, notamment du premier et deuxième brins, voire du troisième brin. L'indicateur de tension peut être configuré pour recueillir et donner une information relative à la tension des moyens anti-basculement, par exemple mesurer une tension des moyens anti-basculement, notamment d'au moins l'un des brins voire des trois brins de sangle.

L'invention a encore pour objet, selon un deuxième aspect de l'invention, un dispositif anti-basculement pour un siège auto pour enfant, destiné à équiper un siège de véhicule, le siège auto comprenant. Les carastéristiques techniques de la revendication indépendante 14.

Selon une caractéristique additionnelle de l'invention, Les moyens anti-basculement peuvent comprendre au moins une sangle fixée sur la structure du siège auto et agencée pour être fixée au véhicule, notamment à un élément d'accrochage du véhicule, de manière à solidariser le siège auto au véhicule.

Selon cette caractéristique additionnelle de l'invention, le siège auto comporte au moins un guide-sangle disposé sur le dossier de manière à guider la sangle.

Le guide-sangle peut par exemple être positionné dans une partie supérieure du dossier sur au moins un côté, voire sur les deux côtés du dossier. Le guide-sangle peut consister par exemple en un élément fixé sur la structure ou, en variante formé d'un seul tenant avec la structure, par exemple par moulage de matière, par exemple en forme d'agrafe. Le guide-sangle peut consister en une forme du dossier permettant un guidage naturel. Le guide-sangle peut présenter une couleur différente du dossier pour être immédiatement identifié par l'utilisateur.

Grâce à la présence d'au moins un guide-sangle, la sangle peut être guidée selon un côté souhaité du siège auto et non sur le dessus du siège auto ou selon un côté gênant l'installation de l'enfant, lorsque le siège auto est dans une position de voyage dos à la route, le cas échéant.

En effet, si le siège auto est placé dos à la route, lorsqu'il est configuré pour pouvoir être dans cette position de voyage, on peut faire passer la sangle par le guide-sangle selon un côté du siège auto de manière à faciliter l'installation de l'enfant dans le siège auto, notamment si l'on choisit le guide-sangle disposé du côté intérieur du véhicule et non du côté de la portière du véhicule.

De plus, la sangle n'étant pas disposée au-dessus de l'enfant mais à côté de celui-ci, elle ne gêne pas l'enfant installé dans le siège auto.

### 5. Liste des figures

D'autres caractéristiques et avantages de l'invention apparaîtront plus clairement à la lecture de la description suivante de modes de réalisation de l'invention, donnés à titre d'exemples illustratifs et non limitatifs, et des dessins annexés, parmi lesquels :
- la figure 1 représente de façon schématique en perspective en vue de derrière un exemple de siège auto selon l'invention, prêt à être installé sur un siège d'un véhicule ;
- la figure 2 représente de manière schématique et en perspective le siège auto de la figure 1 représenté après avoir fait pivoter la structure du siège relativement à l'embase d'environ 90° ;
- la figure 3 représente de matière schématique, en perspective le siège auto de la figure 1 que l'on a fait tourner de 180°, de manière à pouvoir l'installer dos à la route dans le véhicule ;
- la figure 4 illustre de manière schématique et partielle, un exemple de solidarisation du deuxième brin à l'embase du siège auto conforme à l'invention ;
- les figures 5 et 6 illustrent, de manière schématique et partielle, un autre exemple de solidarisation du deuxième brin à l'embase du siège auto ;
- la figure 7 illustre, de manière schématique et partielle, un autre exemple de réalisation de l'invention dans la fixation du deuxième brin aux deux autres brins ; et
- la figure 8 illustre de manière schématique et partielle un autre exemple de réalisation des moyens anti-basculement dans le cas du siège de la figure 7.

### 6. Description détaillée de modes de réalisation particuliers

L'invention propose donc une nouvelle approche des moyens anti-basculement d'un siège auto, sous la forme d'un ensemble de trois brins de sangle, définissant un Y. Comme expliqué plus en détail ci-après, ces moyens anti-basculement du siège auto sont configurés de façon que le deuxième brin s'étende sensiblement verticalement, le long du dossier du véhicule, et reste tendue même lorsque la structure est déplacée relativement à l'embase, notamment en rotation.

Le deuxième brin s'étend donc dans un plan sensiblement vertical lorsque le siège est dans une position de voyage, face à la route, et seul le troisième brin de sangle se déplace sensiblement lorsque la structure est déplacée, notamment en rotation, les premier et deuxième brins restant sensiblement statiques et tendus pendant le déplacement de la structure.

Le deuxième brin peut notamment être agencé pour être solidarisé à l'embase au voisinage des pinces Isofix.

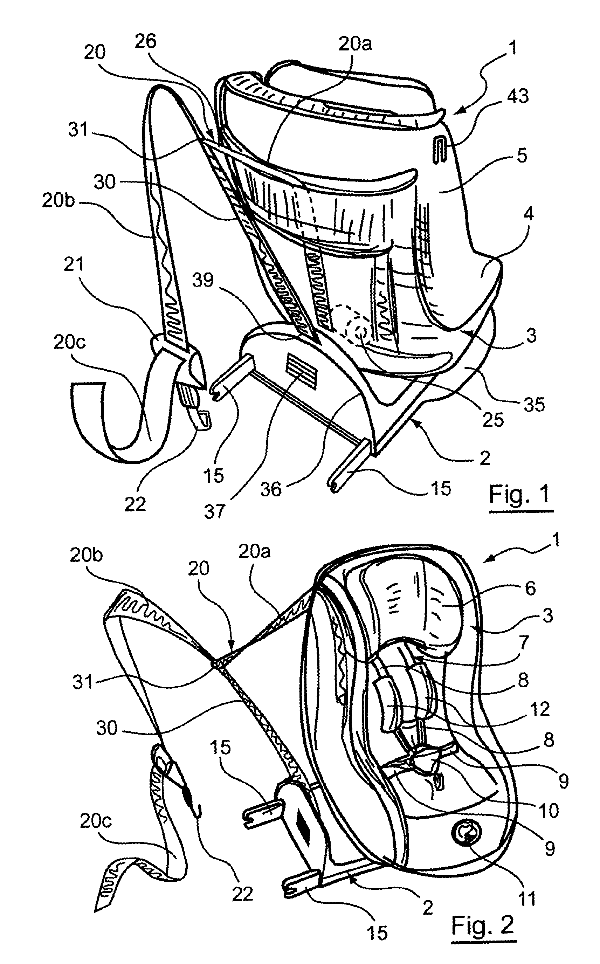

On a représenté sur la figure 1 un siège auto 1 comportant une embase 2 et une structure 3 liée à l'embase, la structure 3 comprenant une assise 4 et un dossier 5. Comme visible sur la figure 2, le siège auto 1 comporte, dans l'exemple illustré, une têtière 6, ou appui-tête, ainsi qu'un harnais 7 comprenant deux bretelles 8 et deux sangles ventrales 9. Les bretelles 8 et les sangles ventrales 9 sont destinées à être rassemblées et fixées dans une boucle de fixation 10 de manière à maintenir un enfant assis dans le siège. Des fourreaux 12 forment des manchons entourant chacun des bretelles 8 du harnais 7 et ont pour rôle d'améliorer la retenue de l'enfant au cours d'un choc.

Dans l'exemple illustré, la structure 3 est mobile en rotation relativement à l'embase 2. Les moyens enclenchant la rotation, par exemple des poignées, n'ont pas été représentés, dans un souci de clarté du dessin. Un bouton 11 situé à l'avant du siège auto 1 peut permettre en outre l'inclinaison de la structure 3 relativement à l'embase 2. L'invention s'applique également aux cas où le siège auto est uniquement réglable en inclinaison et non en rotation, même si ce mode de réalisation n'est pas spécifiquement illustré sur les figures.

La structure 3 comporte un revêtement, visible sur les figures, généralement réalisé en tissu, de manière connue en soi.

Le siège auto 1 comprend les moyens de solidarisation au véhicule suivants.

L'embase 2 peut comporter un système d'ancrage comprenant dans l'exemple illustré deux points de fixation, sous la forme de deux pinces 15 correspondant à la norme Isofix, agencées pour être solidarisées à des points d'ancrage prévus à cet effet dans le véhicule.

Un troisième point de fixation est formé par des moyens anti-basculement comportant trois brins de sangle, un premier brin 20b étant agencé pour être fixé au véhicule, notamment à un élément d'accrochage du véhicule, un deuxième brin 30 étant agencé pour être fixé à l'embase et un troisième brin 20a étant agencé pour être fixé à la structure du siège auto, les trois brins étant réunis en un point 31 de réunion des moyens anti-basculement.

Dans l'exemple illustré sur les figures 1 à 4, les premier et troisième brins 20b et 20a forment des extrémités d'une même sangle 20 à laquelle on a fixé de façon permanente un deuxième brin 30.

Les moyens anti-basculement comportent une boucle 21 portant un crochet 22 d'accrochage du premier brin 20b à un élément d'accrochage du véhicule. Le premier brin 20b se prolonge dans cet exemple au-delà de la boucle 21 par une portion de sangle de réglage 20c et de longueur variable en fonction de l'ajustement nécessaire au moment de la fixation du crochet 22 au véhicule.

Dans l'exemple illustré, le premier brin 20b est relié au crochet 22 destiné à être fixé au véhicule et s'étend entre la boucle 21 et le point 31 de réunion des trois brins.

Le deuxième brin 30 s'étend entre une extrémité destinée à être fixée à l'embase et le point 31 de réunion des trois brins.

Le troisième brin 20a s'étend entre une extrémité destinée à être fixée à la structure et le point 31 de réunion des trois brins.

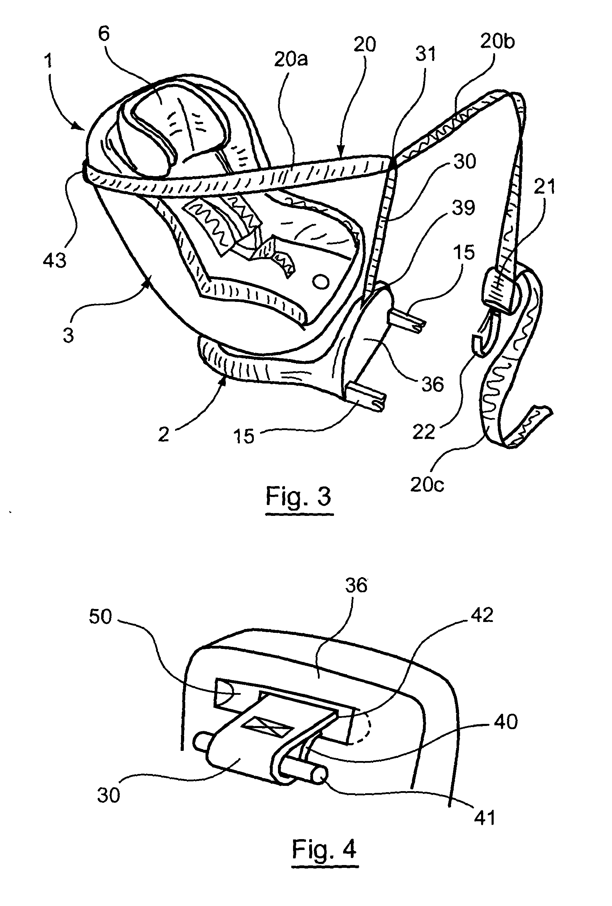

Comme illustré sur les figures 1 à 3, le siège auto, de par la rotation possible de la structure 3 relativement à l'embase 2, peut occuper une position d'installation illustrée sur la figure 2, une position de voyage face à la route illustrée sur la figure 1 et une position de voyage dos à la route illustrée sur la figure 3, l'embase 2 étant configurée pour rester fixe relativement au siège du véhicule une fois qu'elle est solidarisée à celui-ci, par exemple à l'aide des pinces 15.

Dans ce siège auto, la tension des moyens anti-basculement est assurée par le premier brin lorsque celui-ci est fixé au véhicule et par le deuxième brin lorsque celui-ci fixé à l'embase.

Le troisième brin, fixé à la structure du siège auto et présentant une longueur ou une extensibilité variable et suffisante, permet le mouvement en rotation et/ou en inclinaison de la structure par rapport à l'embase, sans modifier la tension des premier et deuxième brins de sangle.

Le siège auto 1 comporte, pour permettre cette longueur variable, dans cet exemple illustré, un dispositif enrouleur 25 visible en pointillés sur la figure 1, destiné à recevoir une portion du troisième brin 20a, sous forme enroulée. Dans l'exemple illustré, le dispositif enrouleur 25 est intégré dans la structure du siège auto, notamment en bas du dossier et n'est donc pas visible depuis l'extérieur du siège auto. Le dispositif enrouleur 25 comporte un élément de rappel sous la forme par exemple d'un ressort, non visible sur les figures, pour permettre l'enroulement automatique du troisième brin afin d'en assurer la tension permanente.

Le dossier 5 de la structure du siège auto 1 présente dans l'exemple illustré une ouverture transversale 26 formée sur l'arrière du dossier, s'étendant sur une grande portion de la largeur du dossier et au travers de laquelle circule le troisième brin 20a. La largeur de cette ouverture transversale 26 peut être déterminée de manière à ce que la variation de la tension des moyens anti-basculement lors d'une éventuelle rotation de la structure d'environ 90° soit minime lorsque le siège auto est fixé au véhicule.

Le crochet 22 pourrait être remplacé par un autre système d'accrochage au véhicule sans sortir du cadre de l'invention.

Comme illustré sur les figures 1 à 3, le premier brin 20b s'étend d'abord vers le haut avant de redescendre vers le bas, en suivant la forme du dossier du siège du véhicule. En effet, même si, sur les figures 1 à 3, le siège auto 1 est représenté seul, non solidarisé au siège du véhicule, la forme et la hauteur du siège du véhicule feront que le premier brin 20b s'étendra comme illustré, à savoir vers le haut puis vers le bas, participant à la tension du deuxième brin 30 lorsque le siège auto est fixé au siège du véhicule, à l'aide des pinces 15 et du crochet 22 dans cet exemple.

La position du point de réunion 31 peut être variable ou non.

Dans l'exemple illustré, le deuxième brin 30 consiste en une sangle réalisée dans un matériau similaire à celui des deux autres brins 20b et 20a.

Dans l'exemple illustré sur les figures 1 à 3, le deuxième brin 30 est fixé de façon permanente à la sangle 20 formant les deux autres brins 20a et 20b en étant cousu à ceux-ci au point de réunion 31.

Dans une variante non illustrée, le deuxième brin 30 peut être fixé de façon permanente à la sangle 20 formant les deux autres brins 20a et 20b de manière différente, en étant soudé et/ou collé à ceux-ci ou fixé autrement.

L'embase 2, dans cet exemple, se présente sous forme d'un plateau 35 sensiblement parallèle à l'assise 4, à une extrémité duquel s'étend vers le haut une portion d'extension 36 sensiblement parallèle au dossier du siège du véhicule. Dans cette portion d'extension 36 de l'embase 2 est logé un détecteur 37 de tension du système de fixation. Un indicateur de tension, ou de non jeu, est prévu sur une partie visible, par l'utilisateur, du siège auto, de manière à délivrer à l'utilisateur une information relative à la tension de la sangle anti-basculement.

L'indicateur de tension peut par exemple se présenter sous forme d'une information colorée, par exemple verte si la tension est bonne, et rouge si la tension n'est pas suffisante. L'indicateur et/ou détecteur de tension des moyens anti-basculement peut être mécanique ou électronique. Dans cet exemple, le deuxième brin 30 pénètre à l'intérieur de la portion d'extension 36 de l'embase 2 par une ouverture, par exemple une ouverture 39 formée en partie supérieure de la portion d'extension 36 comme illustré sur les figures 1 et 3, ou une ouverture disposée à un autre endroit, formée dans l'embase.

Comme illustré sur la figure 4, le deuxième brin 30 ressort par une autre ouverture 42 formée dans l'embase. Le deuxième brin 30 est, dans cet exemple, fixé à l'embase, solidaire d'une tige 41, par exemple en formant une boucle 40 autour de la tige 41, la tige 41 venant se loger dans un logement 50 formé dans la portion d'extension 36 de l'embase 2 et dans lequel débouche l'ouverture 42.

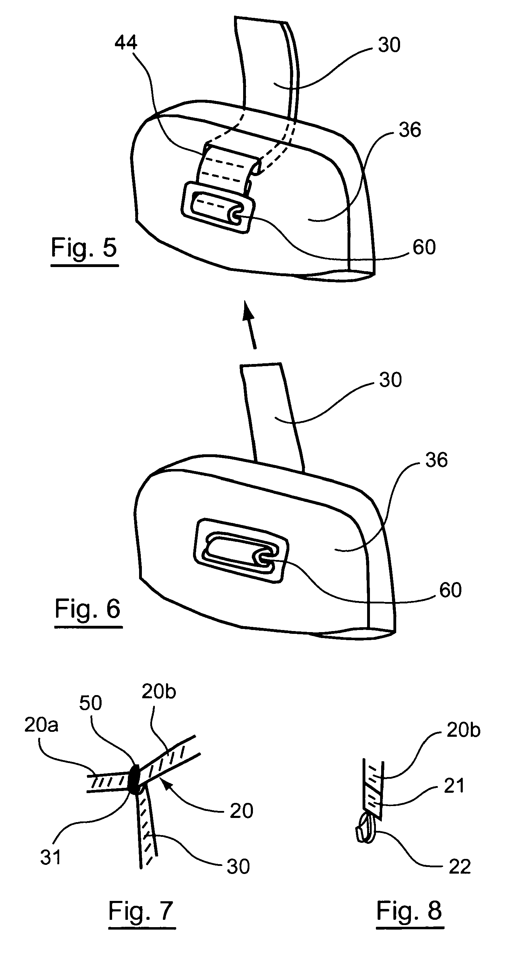

Dans l'exemple des figures 5 et 6, le deuxième brin est fixé à l'embase différemment. La figure 5 illustre le deuxième brin 30 à l'état relâché, non tendu, tandis que la figure 6 illustre le deuxième brin 30 à l'état tendu. Le deuxième brin 30 entre dans l'embase par une ouverture non visible et ressort par une ouverture 44 formée dans l'embase. Le deuxième brin 30 est, dans ce mode de réalisation, fixé à l'embase, sur la portion d'extension 36, à l'aide d'une boucle 60, par exemple métallique, dont le deuxième brin est solidaire, par exemple à l'extrémité libre du deuxième brin. La boucle 60 vient en butée contre l'embase à l'état tendu illustré sur la figure 6, à l'emplacement de l'ouverture 44, la boucle étant plus grande que l'ouverture 44.

Dans l'exemple illustré, la structure 3 comporte, outre les éléments déjà décrits ci-dessus, au moins un guide-sangle 43, deux dans l'exemple illustré dont un seul est visible sur la figure 1, situés en haut et latéralement de chaque côté du dossier 5 de la structure 3 du siège auto, de manière à recevoir et guider le troisième brin 20a de sangle, en particulier voire exclusivement lorsque le siège est fixé dans la position de voyage dos à la route comme illustré sur la figure 3.

Une variante de réalisation de la solidarisation du deuxième brin 30 aux deux autres brins 20a et 20b a été illustrée sur les figures 7 et 8.

Dans cet exemple, le deuxième brin 30 est fixé de manière amovible aux deux autres brins 20a et 20b, notamment à l'aide d'une pince de clippage 50 telle qu'illustrée, permettant la solidarisation du deuxième brin 30 aux deux autres brins 20a et 20b, au point de réunion 31. Dans ce cas, la solidarisation du deuxième brin 30 peut être réalisée une fois que le siège auto est solidarisé au véhicule, c'est-à-dire une fois que le crochet 22 est fixé à un élément d'accrochage du véhicule. Dans ce cas, la portion de sangle de réglage 20c du premier brin 20b peut être supprimée comme illustré sur la figure 8, le réglage de la longueur de sangle 20 étant fait par l'utilisateur avant de fixer le deuxième brin 30 sur les deux autres brins 20a et 20b.

Bien sûr, l'invention n'est pas limitée aux exemples qui viennent d'être décrits.

Le point 31 de réunion n'est bien sûr pas un élément ponctuel mais une zone des moyens anti-basculement. De plus, il peut ne pas s'agir d'un point fixe des moyens anti-basculement mais d'un point variable, notamment lorsque le deuxième brin 30 est fixé de façon amovible aux deux autres brins.

Le premier brin peut être fixé de manière amovible, par exemple à l'aide de moyens de clippage ou d'une pince aux deux autres brins qui, eux, seraient réalisés d'une seule pièce. En variante, le troisième brin peut être fixé de manière amovible, par exemple à l'aide de moyens de clippage ou d'une pince aux deux autres brins qui, eux, seraient réalisés d'une seule pièce.

Plus généralement, les trois brins peuvent être réunis dans un module de solidarisation formant le point de réunion, de façon amovible ou non.

Le siège auto peut être inclinable mais non rotatif, la structure du siège auto étant alors mobile uniquement en translation relativement à l'embase (et non mobile en rotation).

Dans toute la description, les expressions « comportant un » et « comprenant un » doivent être comprises comme étant synonymes respectivement des expressions « comportant au moins un » et « comprenant au moins un », sauf si le contraire est spécifié.

## Revendications

1. Siège auto (1) pour enfant, destiné à équiper un siège de véhicule, comprenant :
- une embase (2) destinée à être posée sur le siège du véhicule, et
- une structure (3) mobile par rapport à l'embase (2), et liée à celle-ci, comportant une assise (4) et un dossier (5),
**caractérisé en ce qu'**il met en oeuvre des moyens anti-basculement dudit siège auto, comprenant trois brins de sangle :
- un premier brin (20b) agencé pour être fixé au véhicule,
- un deuxième brin (30) agencé pour être fixé à l'embase (2), et
- un troisième brin (20a) agencé pour être fixé à la structure (3) du siège auto,
les trois brins de sangle étant réunis en un point (31) desdits moyens anti-basculement.

2. Siège auto selon la revendication 1, **caractérisé en ce que** le troisième brin, fixé à la structure du siège auto, présente une longueur et/ou une extensibilité variable et suffisante, de manière à permettre un mouvement en rotation et/ou en inclinaison de la structure par rapport à l'embase.

3. Siège auto selon la revendication 1 ou 2, **caractérisé en ce que** deux desdits brins (20a, 20b) correspondent aux deux extrémités d'une même sangle (20), le dernier brin (30) étant fixé de manière permanente à ladite sangle (20).

4. Siège auto selon la revendication précédente, **caractérisé en ce que** ledit dernier brin (30) est cousu, soudé et/ou collé à ladite sangle (20).

5. Siège auto selon la revendication 1 ou 2, **caractérisé en ce que** le deuxième brin (30) est fixé de manière amovible à au moins l'un des autres brins (20a, 20b), notamment par clippage.

6. Siège auto selon l'une quelconque des revendications précédentes, **caractérisé en ce que** la structure (3) est mobile en rotation relativement à l'embase (2).

7. Siège auto selon l'une quelconque des revendications précédentes, **caractérisé en ce qu'**il comporte un dispositif enrouleur (25) destiné à recevoir au moins une portion dudit troisième brin (20a) sous forme enroulée.

8. Siège auto selon la revendication précédente, **caractérisé en ce que** le dispositif enrouleur (25) est intégré dans la structure (3).

9. Siège auto selon l'une quelconque des revendications précédentes, **caractérisé en ce que** ledit premier brin (20b) se prolonge, après un point de fixation au véhicule, par une portion de sangle de réglage (20c).

10. Siège auto selon l'une quelconque des revendications précédentes, **caractérisé en ce que** le dossier (5) présente une ouverture transversale (26) s'étendant sur une grande portion de la largeur du dossier (5), et au travers de laquelle circule ledit troisième brin (20a).

11. Siège auto selon l'une quelconque des revendications précédentes, **caractérisé en ce que** la structure (3) comporte au moins un guide-sangle (43) disposé sur le dossier (5) de manière à guider ledit troisième brin (20a).

12. Siège auto selon l'une quelconque des revendications précédentes, **caractérisé en ce que** l'embase (2) comprend un système d'ancrage au véhicule comportant deux pinces (15) agencées pour être solidarisées à des points d'ancrage correspondants du véhicule.

13. Siège auto selon l'une quelconque des revendications précédentes, **caractérisé en ce qu'**il comporte un détecteur et/ou un indicateur de tension (37) d'au moins l'un desdits brins.

14. Dispositif anti-basculement pour un siège auto (1) pour enfant, destiné à équiper un siège de véhicule, le siège auto comprenant :
- une embase (2) destinée à être posée sur le siège du véhicule, et
- une structure (3) mobile par rapport à l'embase (2), et liée à celle-ci, comportant une assise (4) et un dossier (5), Ledit dispositif comportant au moins deux brins de sangle agencés pour être fixés au véhicule ou à l'embase (2) du siège auto (1),
dispositif **caractérisé en ce qu'**il comprend trois brins de sangle :
- un premier brin (20b) agencé pour être fixé au véhicule,
- un deuxième brin (30) agencé pour être fixé à l'embase (2), et
- un troisième brin (20a) agencé pour être fixé à la structure (3),
les trois brins de sangle étant réunis en un point (31) du dispositif anti-basculement.

## Claims

1. Child's car seat (1), with which a vehicle seat is intended to be provided, comprising:
- a base (2) which is intended to be placed on the seat of the vehicle, and
- a structure (3) which can be moved relative to the base (2) and which is connected thereto, comprising a seat member (4) and a backrest (5),
**characterised in that** it uses anti-tilting means of the car seat, comprising three strap strands:
- a first strand (20b) which is arranged so as to be fixed to the vehicle,
- a second strand (30) which is arranged so as to be fixed to the base (2), and
- a third strand (20a) which is arranged so as to be fixed to the structure (3) of the car seat,
the three strap strands being joined at a point (31) of the anti-tilting means.

2. Car seat according to claim 1, **characterised in that** the third strand, which is fixed to the structure of the car seat, has a length and/or an extensibility which is variable and sufficient to allow movement in terms of rotation and/or inclination of the structure relative to the base.

3. Car seat according to claim 1 or 2, **characterised in that** two of the strands (20a, 20b) correspond to the two ends of the same strap (20), the last strand (30) being permanently fixed to the strap (20).

4. Car seat according to the preceding claim, **characterised in that** the last strand (30) is stitched, welded and/or adhesively-bonded to the strap (20).

5. Car seat according to claim 1 or 2, **characterised in that** the second strand (30) is removably fixed to at least one of the other strands (20a, 20b), in particular by clipsage.

6. Car seat according to any one of the preceding claims, **characterised in that** the structure (3) can be moved in terms of rotation relative to the base (2).

7. Car seat according to any one of the preceding claims, **characterised in that** it comprises a winding device (25) which is intended to receive at least a portion of the third strand (20a) in a wound form.

8. Car seat according to the preceding claim, **characterised in that** the winding device (25) is integrated in the structure (3).

9. Car seat according to any one of the preceding claims, **characterised in that** the first strand (20b) is extended, after a point for being fixed to the vehicle, by a portion of the adjusting strap (20c).

10. Car seat according to any one of the preceding claims, **characterised in that** the backrest (5) has a through-hole (26) which extends over a large portion of the width of the backrest (5) and through which the third strand (20a) extends.

11. Car seat according to any one of the preceding claims, **characterised in that** the structure (3) comprises at least one strap guide (43) which is arranged on the backrest (5) so as to guide the third strand (20a).

12. Car seat according to any one of the preceding claims, **characterised in that** the base (2) comprises a system for anchoring to the vehicle, comprising two forked clamp members (15) which are arranged so as to be fixedly joined to corresponding anchoring points of the vehicle.

13. Car seat according to any one of the preceding claims, **characterised in that** it comprises a tension detector and/or indicator (37) for at least one of the strands.

14. Anti-tilting device for a child's car seat (1), with which a vehicle seat is intended to be provided, the car seat comprising:
- a base (2) which is intended to be placed on the seat of the vehicle, and
- a structure (3) which can be moved relative to the base (2) and which is connected thereto, comprising a seat member (4) and a backrest (5), the device comprising at least two strap strands which are arranged so as to be fixed to the vehicle or to the base (2) of the car seat (1),
which device is **characterised in that** it comprises three strap strands:
- a first strand (20b) which is arranged so as to be fixed to the vehicle,
- a second strand (30) which is arranged so as to be fixed to the base (2), and
- a third strand (20a) which is arranged so as to be fixed to the structure (3),
the three strap strands being joined at a point (31) of the anti-tilting device.

## Patentansprüche

1. Autositz (1) für ein Kind, der dazu bestimmt ist, auf einem Kraftfahrzeugsitz verwendet zu werden, umfassend:
- einen Sockel (2), der dazu bestimmt ist, auf den Kraftfahrzeugsitz gestellt zu werden, und
- eine in Bezug zu dem Sockel (2) und mit diesem verbundene Struktur (3), umfassend eine Sitzfläche (4) und eine Rückenlehne (5),
**dadurch gekennzeichnet, dass** er Mittel zur Verhinderung des Kippens des Autositzes einsetzt, umfassend drei Gurtabschnitte:
- einen ersten Abschnitt (20b), der dazu vorgesehen ist, am Fahrzeug befestigt zu werden,
- einen zweiten Abschnitt (30), der dazu vorgesehen ist, am Sockel (2) befestigt zu werden, und
- einen dritten Abschnitt (20a), der dazu vorgesehen ist, an der Struktur (3) des Autositzes befestigt zu werden,
wobei die drei Gurtabschnitte an einem Punkt (31) der Mittel zur Verhinderung des Kippens vereint sind.

2. Autositz nach Anspruch 1,
**dadurch gekennzeichnet, dass** der dritte Abschnitt, der an der Struktur des Autositzes befestigt ist, eine variable und ausreichende Länge und/oder Dehnbarkeit besitzt, um eine Dreh- und/oder Neigungsbewegung der Struktur in Bezug zu dem Sockel zu ermöglichen.

3. Autositz nach Anspruch 1 oder 2,
**dadurch gekennzeichnet, dass** zwei der Abschnitte (20a, 20b) den beiden Enden eines selben Gurts (20) entsprechen, wobei der letzte Abschnitt (30) permanent am Gurt (20) befestigt ist.

4. Autositz nach dem vorhergehenden Anspruch,
**dadurch gekennzeichnet, dass** der letzte Abschnitt (30) an den Gurt (20) genäht, geschweißt und/oder geklebt ist.

5. Autositz nach Anspruch 1 oder 2,
**dadurch gekennzeichnet, dass** der zweite Abschnitt (30) abnehmbar an mindestens einem der anderen Abschnitte (20a, 20b), insbesondere durch Clipsen, befestigt ist.

6. Autositz nach einem der vorhergehenden Ansprüche,
**dadurch gekennzeichnet, dass** die Struktur (3) relativ zu dem Sockel (2) drehbar beweglich ist.

7. Autositz nach einem der vorhergehenden Ansprüche,
**dadurch gekennzeichnet, dass** er eine Aufwickelvorrichtung (25) umfasst, die dazu bestimmt ist, mindestens einen Teil des dritten Abschnittes (20a) in aufgewickelter Form aufzunehmen.

8. Autositz nach dem vorhergehenden Anspruch,
**dadurch gekennzeichnet, dass** die Aufwickelvorrichtung (25) in die Struktur (3) integriert ist.

9. Autositz nach einem der vorhergehenden Ansprüche,
**dadurch gekennzeichnet, dass** der erste Abschnitt (20b) jenseits eines Befestigungspunkts am Fahrzeug durch einen Gurtabschnitt (20c) zur Einstellung verlängert ist.

10. Autositz nach einem der vorhergehenden Ansprüche,
**dadurch gekennzeichnet, dass** die Rückenlehne (5) eine Queröffnung (26) aufweist, die sich auf einem großen Teil der Breite der Rückenlehne (5) erstreckt und durch welche hindurch der dritte Abschnitt (20a) verläuft.

11. Autositz nach einem der vorhergehenden Ansprüche,
**dadurch gekennzeichnet, dass** die Struktur (3) mindestens eine Gurtführung (43) umfasst, die auf der Rückenlehne (5) vorgesehen ist, um den dritten Abschnitt (20a) zu führen.

12. Autositz nach einem der vorhergehenden Ansprüche,
**dadurch gekennzeichnet, dass** der Sockel (2) ein System zur Verankerung am Fahrzeug aufweist, umfassend zwei Klemmen (15), die dazu vorgesehen sind, mit entsprechenden Befestigungspunkten des Fahrzeugs verbunden zu werden.

13. Autositz nach einem der vorhergehenden Ansprüche,
**dadurch gekennzeichnet, dass** er einen Spannungsdetektor und/oder -indikator (37) für mindestens einen der Abschnitte umfasst.

14. Vorrichtung zur Verhinderung des Kippens eines Autositzes (1) für ein Kind, der dazu bestimmt ist, auf einem Kraftfahrzeugsitz verwendet zu werden, wobei der Autositz umfasst:
- einen Sockel (2), der dazu bestimmt ist, auf den Kraftfahrzeugsitz gestellt zu werden, und
- eine in Bezug zu dem Sockel (2) und mit diesem verbundene Struktur (3), umfassend eine Sitzfläche (4) und eine Rückenlehne (5),
wobei die Vorrichtung mindestens zwei Gurtabschnitte umfasst, die dazu vorgesehen sind, am Fahrzeug oder am Sockel (2) des Autositzes (1) befestigt zu werden,
**dadurch gekennzeichnet, dass** sie drei Gurtabschnitte umfasst:
- einen ersten Abschnitt (20b), der dazu vorgesehen ist, am Fahrzeug befestigt zu werden,
- einen zweiten Abschnitt (30), der dazu vorgesehen ist, am Sockel (2) befestigt zu werden, und
- einen dritten Abschnitt (20a), der dazu vorgesehen ist, an der Struktur (3) befestigt zu werden,
wobei die drei Gurtabschnitte an einem Punkt (31) der Mittel zur Verhinderung des Kippens vereint sind.
